# EUROPÄISCHE PATENTSCHRIFT

(11) **EP 1 789 456 B1**
(45) Veröffentlichungstag und Bekanntmachung des Hinweises auf die Patenterteilung: **21.10.2009**
(21) Anmeldenummer: 05771174.9
(22) Anmeldetag: 09.08.2005
(51) Int. Cl.: C08F 2/48, C08F 2/10, B01J 2/00, C08F 220/20, C08F 220/06

(54) **VERFAHREN ZUR HERSTELLUNG VON POLYMEREN DURCH SPRÜHPOLYMERISATION**
METHOD FOR PRODUCING POLYMERS BY DISPERSION POLYMERISATION
PROCEDE DE FABRICATION DE POLYMERES PAR POLYMERISATION DE PULVERISATION

(30) Priorität: 02.09.2004 DE 102004042955
(43) Veröffentlichungstag der Anmeldung: 30.05.2007
(73) Patentinhaber: BASF SE, 67056 Ludwigshafen (DE)
(72) Erfinder: LÖSCH, Dennis, 67122 Altrip (DE); WEIDL, Christian, Hubert, 68167 Mannheim (DE); SEIDL, Volker, 68163 Mannheim (DE); MORITZ, Hans-Ulrich, 21227 Bendestorf (DE)
(86) Internationale Anmeldenummer: PCT/EP2005/008606
(87) Internationale Veröffentlichungsnummer: WO 2006/024368

(56) Entgegenhaltungen:
- EP-A- 0 489 967
- WO-A-20/05030810
- GB-A- 777 306
- US-A- 3 644 305
- US-A1- 2002 193 546
- PATENT ABSTRACTS OF JAPAN Bd. 018, Nr. 344 (C-1218), 29. Juni 1994 (1994-06-29) -& JP 06 080944 A (SEKISUI CHEM CO LTD), 22. März 1994 (1994-03-22) & CHEMICAL ABSTRACTS, Bd. 121, Nr. 1, 1994, Columbus, Ohio, US; abstract no.: 581478, KONISHI MASAAKI, KINAMI KAZUHIRO: "Manufacture of bulky adhesive tapes"

## Beschreibung

Die vorliegende Erfindung betrifft ein Verfahren zur Herstellung von Polymeren durch Sprühpolymerisation, deren Verwendung zur Verdickung von Flüssigkeiten sowie eine Vorrichtung zur Herstellung von Polymeren durch Sprühpolymerisation.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erindung zu verlassen.

In der WO-A-99/14246 wird die Herstellung von Polymeren durch Emulsionspolymerisation in Gegenwart ionisierbarer Stabilisatoren beschrieben. Die Polymerdispersionen werden sprühgetrocknet. Die so erhaltenen Polymerpulver können als Verdicker oder Flockungshilfsmittel verwendet werden.

Die EP-A-0 398 151 beschreibt die Herstellung polymerer Verdicker durch Sprühtrocknung wässriger Polymerlösungen oder -dispersionen.

Die DE-A-195 06 287 beschreibt die Herstellung von Verdickungsmitteln für Druckpasten. Die Verdickungsmittel werden durch Emulsionspolymerisation hergestellt, azeotrop entwässert und filtriert.

Die GB-A-0 777 306 beschreibt die Herstellung von Polymeren durch Sprühpolymerisation. Die Reaktion wird durch Amide, wie Acrylamid, Acetamid und partiell hydrolysiertes Polyacrylnitril, katlysiert. Die Polymere können auch als Verdicker für synthetische Harzdisperionen verwendet werden.

In der US-A-3,644,305 wird ein Sprühpolymerisationsverfahren offenbart mit dem niedermolekulare Polymere hergestellt werden können. Die Polymerisation wird bei erhöhtem Druck durchgeführt.

Gemäß der Patentanmeldung WO-A-96/40427 wird die Sprühpolymerisation in der Weise durchgeführt, dass Monomerlösungen in eine geheizte, im wesentlichen statische Atmosphäre verdüst werden. Dabei werden die Monomeren in den versprühten Tropfen polymerisiert und die Tropfen gleichzeitig getrocknet. Bei reduziertem Druck ist der Wassergehalt in den hergestellten Polymerkugeln deutlich verringert, die Polymerteilchen weisen aber eine rauhe Oberfläche auf. Bei erhöhtem Druck werden glatte Polymerkugeln erhalten. Die Anmeldung lehrt, dass die Partikelgröße über die Düsenöffnung eingestellt werden kann.

In J. Appl. Pol. Sci., Band 87, Jahrgang 2003, Seiten 1034 bis 1043, sowie J. Appl. Pol. Sci., Band 88, Jahrgang 2003, Seiten 928 bis 935, wird die Sprühpolymerisation von Natriumacrylat beschrieben. Als Initiator wurde ausschließlich Persulfat eingesetzt. Die Versuche wurden unter Luftatmosphäre im Gegenstrom durchgeführt. Die Verdickungswirkung der erhalten Polymere war gering. Trotz hoher Vernetzerkonzentrationen betrug die Viskosität einer 10 gew.-%igen wässrigen Lösung höchstens 3.900 mPas.

Aufgabe der vorliegenden Erfindung war die Bereitstellung eines verbesserten Verfahrens zur Herstellung polymerer Verdicker.

Die Aufgabe wurde gelöst durch ein Verfahren zur Sprühpolymerisation einer Monomerlösung, enthaltend
a) mindestens ein wasserlösliches ethylenisch ungesättigtes Monomer, wobei die Löslichkeit des Monomeren a) in Wasser mindesten 1 g/100 g Wasser beträgt,
b) 0,01 bis 0,2 Gew.-%, bezogen auf das Monomer a), mindestens einen Vernetzer,
c) mindestens einen Initiator,
d) Wasser,
dadurch gekennzeichnet, dass die Reaktion bei 70 bis 250°C in Gegenwart eines vor dem Reaktor auf Reaktionstemperatur vorgewärmten inerten Trägergases durchgeführt und das Trägergas nach einem Durchgang zumindest teilweise in den Reaktionsraum zurückgeführt wird.

Die Monomerlösung enthält vorzugsweise 0,05 bis 0,15 Gew.-%, des Vernetzers b), bezogen auf dasMonomer a).

Die Reaktion wird in Gegenwart eines inerten Trägergases durchgeführt, wobei inert bedeutet, dass das Trägergas mit den Bestandteilen der Monomerlösung nicht reagieren kann. Das inerte Trägergas ist vorzugsweise Stickstoff. Der Sauerstoffgehalt des inerten Trägergases beträgt vorteilhaft unter 1 Vol.-%, vorzugsweise unter 0,5 Vol.-%, besonders bevorzugt unter 0,1 Vol.-%.

Das inerte Trägergas kann im Gleichstrom oder im Gegenstrom zu den frei fallenden Tropfen der Monomerlösung durch den Reaktionsraum geführt werden, bevorzugt im Gleichstrom. Das Trägergas wird nach einem Durchgang zumindest teilweise, bevorzugt zu mindestens 50%, besonders bevorzugt zu mindestens 75%, als Kreisgas in den Reaktionsraum zurückgeführt. üblicherweise wird eine Teilmenge des Trägergases nach jedem Durchgang ausgeschleust, vorzugsweise mindestens 10%.

Die Gasgeschwindigkeit wird vorzugsweise so eingestellt, dass die Strömung im Reaktor gerichtet ist, beispielsweise liegen keine der allgemeinen Strömungsrichtung entgegengesetzte Konvektionswirbel vor, und beträgt beispielsweise 0,02 bis 1,5 m/s, bevorzugt 0,05 bis 0,4 m/s.

Die Reaktionstemperatur beträgt vorzugsweise 80 bis 190°C, besonders bevorzugt 90 bis 140°C.

Die Konzentration der Monomeren a) in der Monomerlösung beträgt üblicherweise 2 bis 80 Gew.-%, vorzugsweise 5 bis 70 Gew.-%, besonders bevorzugt 10 bis 60 Gew.-%.

Die Löslichkeit der Monomeren a) in Wasser beträgt mindestens 1 g/100 g Wasser, vorzugsweise mindestens 5 g/100 g Wasser, besonders bevorzugt mindestens 25 g/100 g Wasser, ganz besonders bevorzugt mindestens 50 g/100 g Wasser.

Ethylenisch ungesättigte Monomere a) sind beispielsweise ethylenisch ungesättigte C₃-C₆-Carbonsäuren. Bei diesen Verbindungen handelt es sich beispielsweise um Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure und Fumarsäure sowie die Alkali- oder Ammoniumsalze dieser Säuren.

Weitere polymerisierbare Monomere a) sind Acrylamidopropansulfonsäure, Vinylphosphonsäure und/oder Alkali- bzw. Ammoniumsalze der Vinylsulfonsäure. Die anderen Säuren können ebenfalls entweder in nicht neutralisierter Form oder in partiell bzw. bis zu 100 % neutralisierter Form bei der Polymerisation eingesetzt werden.

Weiterhin kommen monoethylenisch ungesättigte Sulfon- oder Phosphonsäuren in Betracht, beispielsweise Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Allylphosphonsäure, Styrolsulfonsäure und 2-Acrylamido-2-methylpropansulfonsäure.

Weitere Monomere a) sind beispielsweise Acrylamid, Methacrylamid, Crotonsäureamid, Acrylnitril, Methacrylnitril, Dimethylaminoethylmethacrylat, Dimethylaffiinoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopehtylmethacrylat sowie deren Quarternisierungsprodukte, beispielsweise mit Methylchlorid, Hydroxyethylacrylat, Hydroxyethylmethacrylat, Hydroxypropylacrylat und Hydroxypropylmethacrylat.

Weitere Monomere a) sind Monomere, die durch Umsetzung von stickstoffhaltigen Heterocyclen und/oder Carbonsäureamiden, wie Vinylimidazol, Vinylpyrazol sowie Vinylpyrrolidon, Vinylcaprolactam und Vinylformamid, mit Acetylen erhältlich sind, die auch quarternisiert sein können, beispielsweise mit Methylchlorid, und Monomere, die durch Umsetzung von stickstoffhaltigen Verbindungen, wie beispielsweise Diallyldimethylammoniumchlorid, mit Allylalkohol oder Allylchlorid erhältlich sind.

Desweiteren können auch Vinyl- und Allylester sowie Vinyl- und Allylether, wie Vinylacetat, Allylacetat, Methylvinylether und Methylallylether, als Monomere a) verwendet werden.

Die Monomeren a) können allein oder in Mischung untereinander eingesetzt werden, beispielsweise Mischungen, enthaltend zwei, drei, vier oder mehr Monomere a).

Bevorzugte Monomere a) sind Acrylsäure, Methacrylsäure sowie die Alkali- oder Ammoniumsalze dieser Säuren, Acrylamid, Methacrylamid, Acrylnitril, Methacrylnitril, Itaconsäure, Vinylformamid, Vinylpyrrolidon, Vinylimidazol, quarternisiertes Vinylimidazol, Vinylacetat, Natriumvinylsulfonat, Vinylphosphonsäure, Hydroxyethylacrylat, Hydroxyethylmethacrylat, 2-Acrylamido-2-methylpropansulfonsäure, Diallyldimethylammoniumchlorid sowie deren Mischungen.

Die Monomeren a) sind vorzugsweise mit einem handelsüblichen Polymerisationsinhibitor stabilisiert, besonders bevorzugt mit einem Polymeriationsinhibitor, der nur zusammen mit Sauerstoff wirkt, beispielsweise Hydrochinomonomethylether.

Handelsübliche Polymerisationsinhibitoren sind Polymerisationsinhibitoren, die aus Gründen der Produktsicherheit als Lagerstabilisatoren in den jeweiligen Monomeren eingesetzt werden. Beispiele für solche Lagerstabilisatoren sind Hydrochinon, Hydrochinonmonomethylether, 2,5-Di-tert.-Butylhydrochinon und 2,6-Di-tert.-butyl-4-methylphenol.

Die bevorzugten Polymerisationsinhibitoren benötigen für eine optimale Wirkung gelösten Sauerstoff. Daher können die Polymerisationsinhibitoren vor der Polymerisation durch Inertisierung, d.h. Durchströmen mit einem inerten Gas, vorzugsweise Stickstoff, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Monomere a) werden in Gegenwart eines Vernetzers b) oder einer Kombination verschiedener Vernetzer polymerisiert. Vernetzer sind Verbindungen mit mindestens zwei polymerisierbaren Gruppen.

Geeignete Vernetzer b) sind beispielsweise (Meth)acrylsäureester mehrwertiger Alkohole, die mit bis zu 100, meist bis zu 50, Ethylenoxid- und/oder Propylenoxideinheiten alkoxyliert sein können. Geeignete mehrwertige Alkohole sind insbesondere -C₂C₁₀-Alkanpolyole mit 2 bis 6 Hydroxylgruppen, wie Ethylenglykol, Glycerin, Trimethylolpropan, Pentaerythrit oder Sorbitol. Bevorzugte Vernetzer sind Polyethylenglykoldiacrylat und Polyethylenglykoldimethacrylate, die sich jeweils von Polyethylenglykolen (die als ethoxyliertes Ethylenglykol aufgefasst werden können) eines Molekulargewichts von 200 bis 2000 ableiten. Weitere verwendbare Vernetzer b) sind Methylenbisacrylamid, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat oder Diacrylate und Dimethacrylate von Blockcopolymerisaten aus Ethylenoxid und Propylenoxid.

Desweiteren kommen als Vernetzer b) Diallylcarbonat, Allylcarbonate oder Allylether mehrwertiger Alkohole, die mit bis zu 100, meist bis zu 50, Ethylenoxid- und/oder Propylenoxideinheiten alkoxyliert sein können, und Allylester mehrwertiger Carbonsäuren in Betracht.

Allylcarbonate mehrwertiger Alkohole entsprechen der allgemeinen Formel I 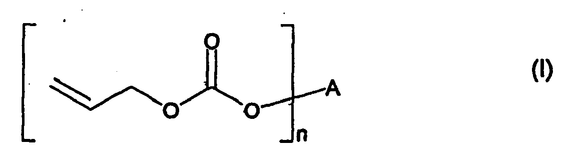 worin A für den Rest eines mehrwertigen Alkohols steht, der mit 0 bis 100, meist 0 bis 50, Ethylenoxid- und/oder Propylenoxideinheiten alkoxyliert sein kann; und n für die Wertigkeit des Alkohols, beispielsweise für eine ganze Zahl von 2 bis 10, vorzugsweise 2 bis 5, steht. Ein besonders bevorzugtes Beispiel einer derartigen Verbindung ist E-thylenglykoldi(allylcarbonat). Weiter eignen sich besonders Polyethylenglykoldi(allylcarbonate), die sich von Polyethylenglykolen eines Molekulargewichts von 200 bis 2000 ableiten.

Als bevorzugte Beispiele für Allylether lassen sich aufführen: Polyethylenglykoldiallylether, die sich von Polyethylenglykolen eines Molekulargewichts von 200 bis 2000 ableiten; Pentraerythrittriallylether oder Trimethylolpropandiallylether. Weiterhin geeignet sind Umsetzungsprodukte von Ethylenglykoldiglycidylether oder Polyethylenglykolglycidylether mit 2 Mol Allylalkohol und/oder Pentaerythritoltriallylether.

Ein geeigneter Allylester einer mehrwertigen Carbonsäure ist beispielsweise Diallylphthalat.

Die Monomeren werden in wässriger Lösung in Gegenwart von Initiatoren c) miteinander polymerisiert.

Die Initiatoren c) werden in üblichen Mengen eingesetzt, beispielsweise in Mengen von 0,001 bis 5 Gew.-%, vorzugsweise 0,01 bis 1 Gew.-%, bezogen auf die zu polymerisierenden Monomere.

Als Initiatoren c) können sämtliche unter den Polymerisationsbedingungen in Radikale zerfallende Verbindungen eingesetzt werden, beispielsweise Peroxide, Hydroperoxide, Wasserstoffperoxid, Persulfate, Azoverbindungen und die sogenannten Redoxinitiatoren. Bevorzugt ist der Einsatz von wasserlöslichen Initiatoren. In manchen Fällen ist es vorteilhaft, Mischungen verschiedener Initiatoren zu verwenden, beispielsweise Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden.

Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert:-Butyl-per-2-ethylhexanoat, tert.-Butylperisononanoat, tert.-Butylpermaleat, tert.-Butylperbenzoat, Di-(2-ethylhexyl)peroxydicarbonat, Dicyclohexylperoxydicarbonat, Di-(4-tert.-butylcyclohexyl)peroxydicarbonat, Dimyristilperoxydicarbonat, Diacetylperoxydicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylperneodekanoat.

Bevorzugte Initiatoren c) sind Azoverbindungen, beispielsweise 2,2'-Azobisisobutyronitril, 2,2'-Azobis(2,4-dimethylvaleronitril) und 2,2'-Azobis(4-methoxy-2,4-dimethylvaleronitril), insbesondere wasserlösliche Azostarter, beispielsweise 2,2'-Azobis{2-[1-(2-hydroxyethyl)-2-imidazolin-2-yl]propan}dihydrochlorid, 2,2'-Azobis,(2-amidinopropan)dihydrochlorid, 2,2'-Azobis[2-(2-imidazolin-2-yl)propan]dihydrochlorid und 2,2'-Azobis[2-(5-methyl-2-imidazolin-2-yl)propan]dihydrochlorid. Ganz besonders bevorzugt sind 2,2'-Azobis[2-(2-imidazolin-2-yl)propan]dihydrochlorid und 2,2'-Azobis[2-(5-methyl-2-imidazolin-2-yl)propan]dihydrochlorid.

Weiterhin bevorzugte Initiatoren c) sind außerdem Redoxinitiatoren. Die Redoxinitiatoren enthalten als oxidierende Komponente mindestens eine der oben angegebenen Peroxoverbindungen und als reduzierende Komponente beispielsweise Ascorbinsäure, Glukose, Sorbose, Ammonium- oder Alkalimetallhydrogensulfit, -sulfit, -thiosulfat, - hyposulfit, -pyrosulfit, -sulfid oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man beispielsweise 1 x 10⁻⁵ bis 1 Mol-% der reduzierenden Komponente des Redoxkatalysators.

Besonders bevorzugt wird die Polymerisation durch Einwirkung energiereicher Strahlung ausgelöst, wobei man üblicherweise sogenannte Photoinitiatoren als Initiator c) verwendet. Hierbei kann es sich beispielsweise um sogenannte α-Spalter, H-abstrahierende Systeme oder auch um Azide handeln. Beispiele für solche Initiatoren sind Benzophenon-Derivate wie Michlers-Keton, Phenanthren-Derivate, fluoren-Derivate, Anthrachinon-Derivate, Thioxanton-Derivate, Cumarin-Derivate, Benzoinether und deren Derivate, Azoverbindungen, wie die oben genannten Radikalbildner, substituierte Hexaarylbisimidazole oder Acylphosphinoxide, insbesondere 2-Hydroxy-2-methylpropiophenon (Darocure® 1173). Beispiele für Azide sind 2-(N,N-Dimethylamino)-ethyl-4-azidocinnamat, 2-(N,N-Dimethyl-amino)-ethyl-4-azidonaphthylketon, 2-(N,N-Dimethylamino)-ethyl-4-azidobenzoat, 5-Azido-1-naphthyl-2'-(N,N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclohexanon und 2,6-Bis-(p-azidobenzyliden)-4-methylcyclohexanon.

Besonders bevorzugte Initiatoren c) sind Azoinitiatoren, wie 2,2'-Azobis[2-(2-imidazolin-2-yl)propan]dihydrochlorid und 2,2'-Azobis[2-(5-methyl-2-imidazolin-2-yl)propan]dihydrochlorid, und Photoinitiatoren, wie 2-Hydroxy-2-methylpropiophenon und 1-[4-(2-Hydroxyethoxy)-phenyl]-2-hydroxy-2-methyl-1-propan-1-on, Redoxinitiatoren, wie Natriumpersulfat/Hydroxymethylsulfinsäure, Ammoniumperoxodisulfat/Hydroxymethylsulfinsäure, Wasserstoffperoxid/Hydroxymethylsulfinsäure, Natriumpersulfat/Ascorbinsäure, Ammoniumperoxodisulfat/Ascorbinsäure und Wasserstofferoxid/Ascorbinsäure, Photoinitiatoren, wie 1-[4-(2-Hydroxyethoxy)-phenyl]-2-hydroxy-2-methyl-1-propan-1-on, sowie deren Mischungen.

Als Komponente d) enthält die Monomerlösung Wasser.

Der pH-Wert der Monomerlösung ist nicht entscheidend. Entsprechend der Produktanforderungen kann aber der pH-Wert des erfindungsgemäßen Polymeren über den pH-Wert der Monomerlösung auf den gewünschten Bereich eingestellt werden. Beispielsweise sollten Polymere für kosmetische Anwendungen einen pH-Wert um 7 aufweisen.

Die Reaktion wird vorzugsweise in Apparaten durchgeführt, die auch für die Sprühtrocknung geeignet sind. Derartige Reaktoren werden beispielsweise in K. Masters, Spray Drying Handbook, 5th Edition, Longman, 1991, Seiten 23 bis 66, beschrieben.

Die im erfindungsgemäßen Verfahren können eine oder mehrere Sprühdüsen eingesetzt werden. Die einsetzbaren Sprühdüsen unterliegen keiner Beschränkung. Derartigen Düsen kann die zu versprühende Flüssigkeit unter Druck zugeführt werden. Die Zerteilung der zu versprühenden Flüssigkeit kann dabei dadurch erfolgen, dass sie nach Erreichen einer bestimmten Mindestgeschwindigkeit in der Düsenbohrung entspannt wird. Ferner können für den erfindungsgemäßen Zweck auch Einstoffdüsen, wie beispielsweise Schlitzdüsen oder Drallkammern (Vollkegeldüsen) verwendet werden (beispielsweise von Düsen-Schlick GmbH, DE, oder von Spraying Systems Deutschland GmbH, DE).

Erfindungsgemäß bevorzugt sind Vollkegeldüsen. Darunter sind solche mit einem Öffnungswinkel des Sprühkegels von 60 bis 180° bevorzugt. Besonders bevorzugt sind Öffnungswinkel von 90 bis 120°. Der sich beim Versprühen einstellende mittlere Tropfendurchmesser ist erfindungsgemäß typischerweise kleiner 1000 µm, vorzugsweise kleiner 200 µm, bevorzugt kleiner 100 µm, sowie üblicherweise größer 10 µm, vorzugsweise größer 20 µm, bevorzugt größer 50 µm, und kann nach üblichen Methoden, wie Lichtstreuung, oder anhand der bei den Düsenherstellern erhältlichen Kennlinien bestimmt werden. Der Durchsatz je Sprühdüse beträgt zweckmäßig 0,1 bis 10 m³/h, häufig 0,5 bis 5 m³/h.

Der sich beim Versprühen einstellende Tröpfchendurchmesser ist zweckmäßig von 10 bis 1.000 µm, bevorzugt von 10 bis 500 µm, besonders bevorzugt von 10 bis 150 µm, ganz besonders bevorzugt von 10 bis 45 µm.

Die Reaktion kann auch in Apparaten durchgeführt werden in denen die Monomerlösung in Form monodisperser Tropfen frei fallen kann. Geeignet dazu sind Apparaturen, wie sie beispielsweise in der Patentschrift US-A-5,269,980, Spalte 3, Zeilen 25 bis 32, beschrieben sind.

Eine Vertropfung durch laminaren Strahlzerfall, wie in Rev. Sci. Instr., Band 38 (1966), Seiten 502 bis 506, beschrieben, ist ebenfalls möglich.

Die Vertropfung ist gegenüber der Versprühung bevorzugt, insbesondere bei Verwendung von Photoinitiatoren. Durch Vertropfung werden im erfindungsgemäßen Verfahren polymere Verdicker mit niedrigem Staubanteil, optimaler Schüttdichte und guter Fließfähigkeit erhalten.

Sind dagegen hohe Durchsätze an Monomerlösung gewünscht, so ist das Versprühen der Monomerlösung in den Reaktionsraum bevorzugt

Die Reaktionsraum des Polymeriationsreaktors kann im Überdruck oder im Unterdruck durchgeführt werden, ein Unterduck von bis zu 100 mbar gegenüber dem Umgebungsdruck ist bevorzugt.

Die Polymerisationsgeschwindigkeit und die Trockengeschwindigkeit weisen üblicherweise unterschiedliche Temperturabhängigkeiten auf. Dies kann beispielsweise bedeuten, dass die versprühten Tropfen trocknen bevor der gewünschte Umsatz erreicht worden ist. Daher ist es vorteilhaft die Reaktionsgeschwindigkeit und die Trockengeschwindigkeit getrennt zu beeinflussen.

Die Trockengeschwindigkeit kann über den Wasserdampfgehalt des Inertgases beeinflusst werden. Der Wasserdampfgehalt des Inertgases beträgt im allgemeinen bis 90 vol.-%, vorzugsweise bis 50 Vol.-%.

Die Polymeriationsgeschwindigkeit kann durch Art und Menge des verwendeten Initiatorsystems eingestellt werden.

Vorteilhaft zur Steuerung der Polymerisationsgeschwindigkeit ist die Verwendung von Azoverbindungen oder Redoxinitiatoren als Initiatoren c). Das Anspringverhalten der Polymerisation läßt sich mit Azoverbindungen oder Redoxinitiatoren über Auswahl des Initiators, Initiatorkonzentration und Reaktionstemperatur besser steuern als beispielsweise mit reinen Peroxidinitiatoren.

Besonders vorteilhaft sind Photoinitiatoren. Bei Verwendung von Photoinitiatoren kann die Trockengeschwindigkeit über die Temperatur auf den gewünschten Wert eingestellt werden, ohne dass damit gleichzeitig die Radikalbildung wesentlich beeinflusst wird.

Das Trägergas wird zweckmäßigerweise vor dem Reaktor auf die Reaktionstemperatur von 70 bis 250°C, vorzugsweise 80 bis 190°C, besonders bevorzugt 90 bis 140°C, vorgewärmt.

Das Reaktionsabgas, d.h. das der Reaktionsraum verlassende Trägergas, kann beispielsweise in einem Wärmeaustauscher abgekühlt werden. Dabei kondensieren Wasser und nicht umgesetztes Monomer. Danach wird das Reaktionsabgas zumindest teilweise wieder aufgewärmt und als Kreisgas in den Reaktor zurückgeführt. Vorzugsweise wird das Kreisgas so abgekühlt, dass das abgekühlte Kreisgas den für die Reaktion gewünschten Anteil an Wasserdampf hat. Ein Teil des Reaktionsabgases kann ausgeschleust und durch frisches Trägergas ersetzt werden, wobei im Reaktionsabgas enthaltene nicht umgesetzte Monomere abgetrennt und rückgeführt werden können.

Besonders bevorzugt ist ein Wärmeverbund, dass heißt, ein Teil der Abwärme beim Abkühlen des Abgases wird zum Aufwärmen des Kreigases verwendet.

Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Das Reaktionsprodukt kann dem Reaktor in üblicher Weise entnommen werden, vorzugsweise am Boden über eine Förderschnecke, und gegebenenfalls bis zur gewünschten Restfeuchte und zum gewünschten Restmonomerengehalt getrocknet werden.

Ein weiterer Gegenstand der vorliegenden Erfindung ist eine Vorrichtung zur Herstellung von Polymeren durch Sprühpolymerisation, umfassend
i) einen beheizbaren Reaktionsraum,
ii) mindestens eine Vorrichtung zur Tropfenerzeugung im oberen Bereich des Reaktionsraumes i),
iii) mindestens eine Trägergaszuführung im oberen Teil des Reaktionsraumes i),
iv) mindestens eine Trägergasvorheizung,
v) mindestens eine Trägergasabführung im unteren Teil des Reaktionsraumes i),
vi) mindestens ein Mittel zu Rückführung zumindest eines Teil des abgeführten Trägergases aus der Trägergasabführung v) zur Trägergaszuführung iii),
vii) mindestens eine eine Fördereinrichtung im unteren Bereich des Reaktionsraumes i) zum Produktaustrag und
viii) mindestens eine Strahlenquelle, vorzugsweise im oberen Teil des Reaktionsraumes i),
wobei der obere Bereich des Reaktionsraumes die oberen 30%, vorzugsweise die oberen 20%, besonders die oberen 10%, des Reaktionraumvolumens und der untere Bereich des Reaktionsraumes die unteren 30%, vorzugsweise die unteren 20%, besonders die unteren 10%, des Reaktionraumvolumens sind.

Das Mittel vi) umfasst beispielsweise einen Verdichter, eine Mengenmessung und ein regelbares Ventil. Der Verdichter erhöht den Druck des Trägergases und ermöglicht so die Rückführung zur Trägergaszuführung iii). Über Mengenmessung und Ventil kann die rückgeführte Trägergasmenge eingestellt werden.

Die Strahlenquelle unterliegt keiner Beschränkung, vorzugsweise ist die Strahlenquelle auf den verwendeten Photoinitiator abgestimmt. Bevorzugt werden UV-Strahler verwendet, vorzugsweise mit einer Leistung von 0,5 bis 20 kW, besonders bevorzugt 2 bis 10 kW, beispielsweise Fe-dotierte Hg-Strahler.

Das erfindungsgemäße Verfahren kombiniert in vorteilhafter Weise die Herstellung und Trocknung eines polymeren Verdickers in einem Verfahrenschritt, wobei die Polymerisationswärme gleichzeitig zur Trocknung verwendet werden kann.

Nach dem erfindungsgemäßen Verfahren können polymere Verdicker hergestellt werden, die sich aufgrund ihrer geringen Teilchengröße und der damit verbundenen großen Oberfläche schnell lösen und gleichzeitig aufgrund der eingestellten Tropfengrößen beim Versprühen der Monomerlösung einen geringen Feinstaubanteil aufweisen, insbesondere Teilchen mit einer Größe von weniger als 10µm.

Es können nach dem erfindungsgemäßen Verfahren auch kleinere Polymerpartikel erzeugt werden, die anschließend nach üblichen Verfahren phlegmatisiert werden, beispielsweise durch Suspendieren in technischem Weißöl.

Die nach dem erfindungsgemäßen Verfahren herstellbaren polymeren Verdicker eignen sich zum Verdicken von Flüssigkeiten, insbesondere wässriger Systeme.

Die nach dem erfindungsgemäßen Verfahren erhältlichen polymeren Verdicker sind wasserlöslich, u.U. können auch leicht trübe kolloidale Lösungen erhalten werden. Die mit dem nach dem erfindungsgemäßen Verfahren hergestellten polymeren Verdickern hergestellten verdickten Flüssigkeiten enthalten keine partikulären Strukturen.

Wird beispielsweise Wasser mit einem nach dem erfindungsgemäßen Verfahren hergestellten polymeren Verdicker verdickt und die verdickte Lösung durch Wasserzusatz auf eine Viskosität von weniger als 100 mPas (gemessen gemäß DIN 51562) eingestellt, so verbleibt nach Filtration durch ein Filter mit einer Porenweite von ca. 5 µm (beispielsweise mittels eines Filterpapiers S&S 589 Schwarzband von Schleicher & Schüll) kein nachweisbarer Rückstand. Die Rückstandsmenge kann durch Nachspülen mit Wasser, Trocknen und Rückwägung ermittelt werden.

Die erfindungsgemäßen Verfahren herstellbaren polymeren Verdicker können für wässrige Systeme verwendet werden, beispielsweise als Zusatz zu Papierstreichmassen, als Verdickungsmittel für Pigmentdruckpasten und als Zusatz zu wässrigen Farben wie Fassadenfarben. Sie sind außerdem in der Kosmetik einsetzbar, beispielsweise in haarkosmetischen Zubereitungen wie Conditioner oder Haarfestiger, oder als Verdicker für Kosmetikformulierungen sowie für die Oberflächenbehandlung von Leder.

Die Viskosität 2 gew.-%iger wässriger Lösungen, enthaltend nach dem erfindungsgemäßen Verfahren hergestellter Polymere, beträgt bei 23°C mindestens 5.000 mPas, vorzugsweie mindestens 10.000 mPas, besonders bevorzugt mindestens 20.000 mPas.

### Beispiele:

### Beispiel 1 (Vergleichsbeispiel)

7,8 kg Acrylsäure, 22 g Irgacure® 2959 (1-[4-(2-Hydroxyethoxy)-phenyl]-2-hydroxy-2-methyl-1-propan-1-on der Ciba Spezialitätenchemie, CH) und 12 g 2,2'-AzobistN,N'-dimethylenisobutyramidine)dihydrochlorid (Azoinitiator V44 der Wako Deutschland, DE) wurden in 10 kg Wasser gelöst. Diese Lösung wurde in einem erwärmten, mit Stickstoffatmosphäre gefüllten Sprühturm (100°C, 8m Höhe, 2m Breite, Gasgeschwindigkeit 0,1 m/s im Gleichstrom) versprüht. Im oberen Drittel des Sprühturms passierten die Tropfen 6 UV-Lampen (Fe-dotierte Hg-Strahler, je 6kW). Am Boden des Sprühturms wurde ein trockenes, weißes Pulver erhalten. Die durchschnittliche Korngröße betrug 11 µm. Dieses Pulver ließ sich in Wasser wieder klar lösen. Die 1 gew.-%ige Lösung hatte einen pH-Wert von 7 und eine Viskosität von 2.000 mPas.

### Beispiel 2

7,8 kg Acrylsäure, 7,8 g Polyethylenglykoldiacrylat-400, 22 g Irgacure® 2959 (1-[4-(2-Hydroxyethoxy)-phenyl]-2-hydroxy-2-methyl-1-propan-1-on der Ciba Spezialitätenchemie, CH) und 12 g 2,2'-Azobis(N,N'-dimethylenisobutyramidine)dihydrochlorid (Azoinitiator V44 der Wako Deutschland, DE) wurden in 10 kg Wasser gelöst. Diese Lösung wurde in einem erwärmten, mit Stickstoffatmosphäre gefüllten Sprühturm (100°C, 8m Höhe, 2m Breite, Gasgeschwindigkeit 0,1 m/s im Gleichstrom) versprüht. Im oberen Drittel des Sprühturms passierten die Tropfen 6 UV-Lampen (Fe-dotierte Hg-Strahler, je 6kW). Am Boden des Sprühturms wurde ein trockenes, weißes Pulver erhalten. Die durchschnittliche Korngröße betrug 12 µm. Dieses Pulver ließ sich in Wasser wieder klar lösen. Die 1 gew.-%ige Lösung hatte einen pH-Wert von 7 und eine Viskosität von 41.000 mPas.

### Beispiel 3

7,0 kg Acrylsäure, 0,8 kg Acrylamid, 7,8 g Polyethylenglykoldiacrylat-400, 22 g Irgacure® 2959 (1-[4-(2-Hydroxyethoxy)-phenyl]-2-hydroxy-2-methyl-1-propan-1-on der Ciba Spezialitätenchemie, CH) und 12g 2,2'-Azobis(N,N'-dimethylenisobutyramidine)dihydrochlorid (Azoinitiator V44 der Wako Deutschland, DE) wurden in 10 kg Wasser gelöst. Diese Lösung wurde in eine erwärmten, mit strickstoffatmosphäre gefüllten Sprühturm (100°C, 8m Höhe, 2m Breite, Gasgeschwindigkeit 0,1 m/s im Gleichstrom) versprüht. Im oberen Drittel des Sprühturms passieren die Tropfen 6 UV-Lampen (Fe-dotierte Hg-Strahler, je 6kW). Am Boden des Sprühturms wurde ein trockenes, weißes Pulver erhalten. Die durchschnittliche Korngröße betrug 12 µm. Dieses Pulver ließ sich in Wasser wieder klar lösen. Die 1 gew.-%ige Lösung hatte einen pH-Wert von 7 und eine Viskosität von 36.000 mPas.

### Beispiel 4

7,0 kg Acrylsäure, 0,8 kg Acrylamid, 7,8 g Polyethylenglykoldiacrylat-400 und 33 g 2,2'-Azobis(N,N'-dimethylenisobutyramidine)dihydrochlorid (Azoinitiator V44 der Wako Deutschland, DE) wurden in 10 kg Wasser gelöst. Diese Lösung wurde in einem erwärmten, mit Stickstoffatmosphäre gefüllten Sprühturm (120°C, 8m Höhe, 2m Breite, Gasgeschwindigkeit 0,1 m/s im Gleichstrom) versprüht. Am Boden des Sprühturms wurde ein trockenes, weißes Pulver erhalten. Die durchschnittliche Korngröße betrug 15 µm. Dieses Pulver ließ sich in Wasser wieder klar lösen. Die 1 gew.-%ige Lösung hatte einen pH-Wert von 7 und eine Viskosität von 32.000 mPas.

### Beispiel 5

33 g 2,2'-Azobis(N,N'-dimethylenisobutyramidine)dihydrochlorid (Azoinitiator V44 der Wako Deutschland, DE) und 7,8 g Polyethylenglykoldiacrylat-400 wurden in 20,8 kg wässriger Natriumacrylatlösung (37,5 gew.-%ig) gelöst. Diese Lösung wurde in einem erwärmten, mit Stickstoffatmosphäre gefüllten Sprühturm (120°C, 8m Höhe, 2m Breite, Gasgeschwindigkeit 0,1 m/s im Gleichstrom) versprüht. Am Boden des Sprühturms wurde ein trockenes, weißes Pulver erhalten. Die durchschnittliche Korngröße betrug 15µm. Dieses Pulver ließ sich in Wasser wieder klar lösen. Die 1 gew.-%ige Lösung hatte einen pH-Wert von 7 und eine Viskosität von 30.000 mPas.

### Beispiel 6

33 g 2,2'-Azobis(N,N'-dimethylenisobutyramidine)dihydrochlorid (Azoinitiator V44 der Wako Deutschland, DE), 0,8 kg Acrylamid und 4 g Polyethylenglykoldiacrylat-400 wurden in 18,7 kg wässriger Natriumacrylatlösung (37,5 gew.-%ig) und 2,1 kg Wasser gelöst. Diese Lösung wurde in einem erwärmten, mit Stickstoffatmosphäre gefüllten Sprühturm (120°C, 8m Höhe, 2m Breite, Gasgeschwindigkeit 0,1 m/s im Gleichstrom) versprüht. Am Boden des Sprühturms wurde ein trockenes, weißes Pulver erhalten. Die durchschnittliche Korngröße betrug 14 µm. Dieses Pulver ließ sich in Wasser wieder klar lösen. Die 1 gew.-%ige Lösung hatte einen pH-Wert von 7 und eine Viskosität von 40.000 mPas.

### Beispiel 7

33 g 2,2'-Azobis(N,N'-dimethylenisobutyramidine)dihydrochlorid -(Azoinitiator V44 der Wako Deutschland, DE), 7,8 g Polyethylenglykoldiacrylat-400 und 0,8kg Acrylsäure wurden in 18,7 kg wässriger Natriumacrylatlösung (37,5 gew.-%ig) und 2,1 kg Wasser gelöst. Diese Lösung wurde in einem erwärmten, mit Stickstoffatmosphäre gefüllten Sprühturm (120°C, 8m Höhe, 2m Breite, Gasgeschwindigkeit 0,1 m/s im Gleichstrom) versprüht. Am Boden des Sprühturms wurde ein trockenes, weißes Pulver erhalten. Die durchschnittliche Korngröße betrug 15 µm. Dieses Pulver ließ sich in Wasser wieder klar lösen. Die 1 gew.-%ige Lösung hatte einen pH-Wert von 7 und eine Viskosität von 37.000 mPas.

## Patentansprüche

1. Verfahren zur Herstellung von Polymeren durch Sprühpolymerisation einer Monomerlösung, enthaltend
a) mindestens ein wasserlösliches ethylenisch ungesättigtes Monomer, wobei die Löslichkeit des Monomeren a) in Wasser mindestens 1 g/100 g Wasser beträgt,
b) 0,01 bis 0,2 Gew.-%, bezogen auf das Monomer a), mindestens eines Vernetzers,
c) mindestens einen Initiator,
d) Wasser,
**dadurch gekennzeichnet, dass** die Reaktion bei 70 bis 250°C in Gegenwart eines vor dem Reaktor auf Reaktionstemperatur vorgewärmten inerten Trägergases durchgeführt und das Trägergas nach einem Durchgang zumindest teilweise in den Reaktionsraum zurückgeführt wird.

2. Verfahren gemäß Anspruch 1, **dadurch gekennzeichnet, dass** mindestens 50% des Trägergases nach einem Durchgang in den Reaktionsraum zurückgeführt wird.

3. Verfahren gemäß Anspruch 1 oder 2, **dadurch gekennzeichnet, dass** das Trägergas Stickstoff ist.

4. Verfahren gemäß 2 oder 3, **dadurch gekennzeichnet, dass** das Trägergas im Gleichstrom durch den Reaktionsraum geführt wird.

5. Verfahren gemäß einem der Ansprüche 1 bis 4, **dadurch gekennzeichnet, dass** das Monomer a) Acrylsäure, Vinylpyrrolidon, quarternisiertes Vinylimidazol, Acrylamid, quarternisiertes Dimethylaminoethylacrylat und/oder Diallyldimethylammoniumchlorid ist.

6. Verfahren gemäß einem der Ansprüche 1 bis 5, **dadurch gekennzeichnet, dass** der Initiator c) eine Azoverbindung, ein Redoxinitiator oder ein Photoinitiator ist.

7. Verfahren gemäß einem der Ansprüche 1 bis 6, **dadurch gekennzeichnet, dass** der Initiator c) ein Photoinitiator ist.

8. Verfahren gemäß einem der Ansprüche 1 bis 7, **dadurch gekennzeichnet, dass** die Tropfengröße der versprühten Monomerlösung so eingestellt wird, dass die erhaltenen Polymere eine Primärpartikelgröße von 10 bis 150 µm aufweisen.

9. Vorrichtung zur Sprühpolymerisation, **dadurch gekennzeichnet, dass** die Vorrichtung
i) einen beheizbaren Reaktionsraum,
ii) mindestens eine Vorrichtung zur Tropfenerzeugung im oberen Bereich des Reaktionsraumes i),
iii) mindestens eine Trägergaszuführung im oberen Teil des Reaktionsraumes i),
iv) mindestens eine Trägergasvorheizung,
v) mindestens eine Trägergasabführung im unteren Teil des Reaktions-- raumes i),
vi) mindestens ein Mittel zu Rückführung zumindest eines Teil des abgeführten Trägergases aus der Trägergasabführung v) zur Trägergaszuführung iii),
vii) mindestens eine Fördereinrichtung im unteren Bereich des Reaktionsraumes i) zum Produktaustrag und
viii) mindestens eine Strahlenquelle
umfasst, wobei der obere Bereich des Reaktionsraumes die oberen 30% des Reaktionraumvolumens und der untere Bereich des Reaktionsraumes die unteren 30% des Reaktionraumvolumens sind.

10. Vorrichtung gemäß Anspruch 9, **dadurch gekennzeichnet, dass** die Trägergasrückführung einen Verdichter umfasst.

## Claims

1. A process for producing a polymer by spray polymerization of a monomer solution comprising
a) at least one water soluble ethylenically unsaturated monomer, the solubility of said monomer a) in water being not less than 1 g/100 g of water,
b) from 0.01% to 0.2% by weight, based on the monomer a), of at least one crosslinker,
c) at least one initiator,
d) water,
wherein the reaction is carried out at 70 to 250°C in the presence of an inert carrier gas which is preheated to reaction temperature upstream of the reactor and the carrier gas is at least partly recycled into the reaction space after one pass.

2. The process according to claim 1 wherein at least 50% of the carrier gas is recycled into the reaction space after one pass.

3. The process according to claim 1 or 2 wherein the carrier gas is nitrogen.

4. The process according to claim 2 or 3 wherein the carrier gas passes cocurrently through the reaction space.

5. The process according to any one of claims 1 to 4 wherein the monomer a) is acrylic acid, vinylpyrrolidone, quaternized vinylimidole, acrylamide, quaternized dimethylaminoethyl acrylate and/or diallyldimethylammonium chloride.

6. The process according to any of claims 1 to 5 wherein the initiator c) is an azo compound, a redox initiator or a photoinitiator.

7. The process according to any of claims 1 to 6 wherein the initiator c) is a photoinitiator.

8. The process according to any of claims 1 to 7 wherein the droplet size og the spray-dispensed monomezr solution is adjusted such that the polymers obtained have a primary particle size in the range from 10 to 150 µm.

9. Apparatus for spray polymerization comprising
i) a heatable reaction space,
ii) at least one apparatuis for droplet generation in the upper region of the reaction space i),
iii) at least one carrier gas feed in the upper portion of the reaction spade i),
iv) at least one carrier gas preheater,
v) at least one carrier gas outlet in the lower portion of the reaction spade i),
vi) if appropriate at least one means for returning at least a portion of the removed carrier gas from the carrier gas outlet v) to the carrier gas feed iii),
vii) at leastr one conveying device in the lower region of the reaction space i) for product discharge, and
viii) at least one source of radiation, preferably in the upper portion of the reaction space i),
the upper region of the reaction space being the upper 30% of the reaction space volume and the lower region of the reaction space being the lower 30% of the reaction space volume.

10. The apparatus according to claim 9 wherein the carrier gas recycler comprises a compressor.

## Revendications

1. Procédé de fabrication de polymères par polymérisation par pulvérisation d'une solution monomère, contenant
a) au moins un monomère éthyléniquement insaturé soluble dans l'eau, la solubilité du monomère a) dans l'eau étant d'au moins 1 g/100 g,
b) 0,01 à 0,2 % en poids, par rapport au monomère a), d'au moins un agent de réticulation,
c) au moins un initiateur,
d) de l'eau,
**caractérisé en ce que** la réaction est réalisée à 70 à 250°C en présence d'un gaz porteur inerte préchauffé à la température de réaction avant le réacteur et le gaz porteur est recyclé au moins partiellement dans l'espace réactionnel après un passage.

2. Procédé selon la revendication 1, **caractérisé en ce qu'**au moins 50 % du gaz porteur est recyclé dans l'espace réactionnel après un passage.

3. Procédé selon la revendication 1 ou 2, **caractérisé en ce que** le gaz porteur est l'azote.

4. Procédé selon la revendication 2 ou 3, **caractérisé en ce que** le gaz porteur circule à co-courant dans l'espace réactionnel.

5. Procédé selon l'une quelconque des revendications 1 à 4, **caractérisé en ce que** le monomère a) est l'acide acrylique, la vinylpyrrolidone, le vinylimidazol quaternisé, l'acrylamide, l'acrylate de diméthylaminoéthyle quaternisé et/ou le chlorure de diallyldiméthylammonium.

6. Procédé selon l'une quelconque des revendications 1 à 5, **caractérisé en ce que** l'initiateur c) est un composé azo, un initiateur redox ou un photoinitiateur.

7. Procédé selon l'une quelconque des revendications 1 à 6, **caractérisé en ce que** l'initiateur c) est un photoinitiateur.

8. Procédé selon l'une quelconque des revendications 1 à 7, **caractérisé en ce que** la taille de goutte de la solution monomère pulvérisée est ajustée de manière à ce que les polymères obtenus présentent une taille de particule primaire de 10 à 150 µm.

9. Dispositif de polymérisation par pulvérisation, **caractérisé en ce que** le dispositif comprend
i) un espace réactionnel chauffable,
ii) au moins un dispositif de génération de gouttes dans la zone supérieure de l'espace réactionnel i),
iii) au moins une entrée de gaz porteur dans la partie supérieure de l'espace réactionnel i),
iv) au moins un préchauffage de gaz porteur,
v) au moins une sortie de gaz porteur dans la partie inférieure de l'espace réactionnel i),
vi) au moins un moyen de recyclage d'au moins une partie du gaz porteur déchargé entre la sortie de gaz porteur v) et l'entrée de gaz porteur iii),
vii) au moins un dispositif de transport dans la zone inférieure de l'espace réactionnel i) pour le déchargement du produit et
viii) au moins une source de rayonnement,
la zone supérieure de l'espace réactionnel étant les 30 % supérieurs du volume de l'espace réactionnel et la zone inférieure de l'espace réactionnel étant les 30 % inférieurs du volume de l'espace réactionnel.

10. Dispositif selon la revendication 9, **caractérisé en ce que** le recyclage du gaz porteur comprend un compresseur.
